# EUROPEAN PATENT SPECIFICATION

(11) **EP 4 415 080 B1**
(45) Date of publication and mention of the grant of the patent: **10.06.2026**
(21) Application number: 24153494.0
(22) Date of filing: 23.01.2024
(51) Int. Cl.: H01M 4/66, H01M 4/78, H01M 10/04

(54) **POWER STORAGE DEVICE**
ENERGIESPEICHERVORRICHTUNG
DISPOSITIF DE STOCKAGE D'ÉNERGIE

(30) Priority: 10.02.2023 JP 2023019207
(43) Date of publication of application: 14.08.2024
(73) Proprietor: TOYOTA JIDOSHA KABUSHIKI KAISHA, Toyota-shi, Aichi-ken, 471-8571 (JP)
(72) Inventor: Yamanaka, Atsushi, Aichi-ken, 471-8571 (JP)
(74) Representative: D Young & Co LLP

(56) References cited:
- US-A1- 2009 263 709
- US-A1- 2012 328 921

## Description

### BACKGROUND

### Field

The present disclosure relates to a power storage device.

### Description of the Background Art

Japanese Patent No. 7137703 discloses a power storage device including a plurality of power storage modules (bipolar batteries) stacked on top of each other, and a pair of conductive plates arranged on both sides of a corresponding one of the plurality of power storage modules in a stacking direction. A positive electrode terminal is connected to one conductive plate, and a negative electrode terminal is connected to the other conductive plate. Further relevant prior art is found in US 2012/328921 A1.

### SUMMARY

In the power storage device described in Japanese Patent No. 7137703, a current concentrates on a portion of the conductive plate in the vicinity of a current collector terminal.

An object of the present disclosure is to provide a power storage device that can suppress concentration of a current on a portion of a conductive member in the vicinity of a current collector terminal.

A power storage device according to the invention is defined in claim 1.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a perspective view schematically showing a power storage device according to an embodiment of the present disclosure.
Fig. 2 is a plan view of an electrode assembly.
Fig. 3 is a cross-sectional view taken along line III-III in Fig. 2.
Fig. 4 is a cross-sectional view taken along line IV-IV in Fig. 2.
Fig. 5 is a cross-sectional view schematically showing a bipolar electrode.
Fig. 6 is a cross-sectional view schematically showing a monopolar electrode.
Fig. 7 shows a conductive member when viewed from the inside in a stacking direction.
Fig. 8 schematically shows a modification of the conductive member.

### DESCRIPTION OF THE PREFERRED EMBODIMENTS

An embodiment of the present disclosure will be described with reference to the drawings. In the drawings referenced below, the same or corresponding members are denoted by the same reference numerals.

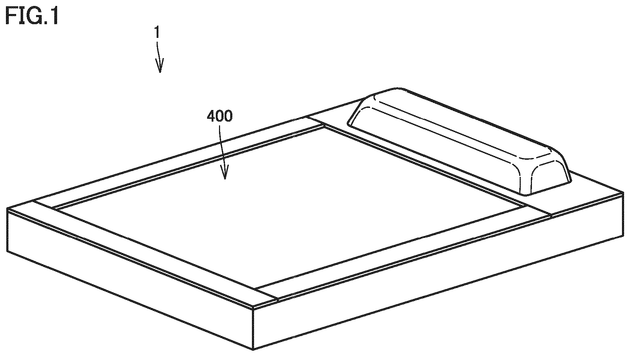

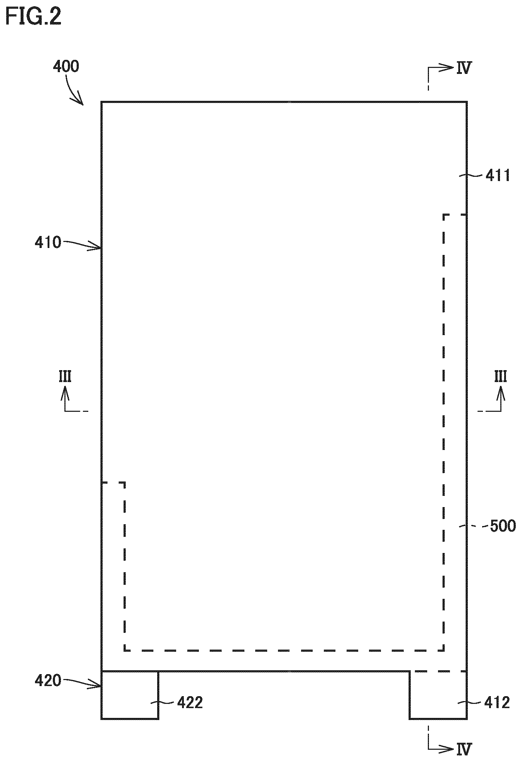

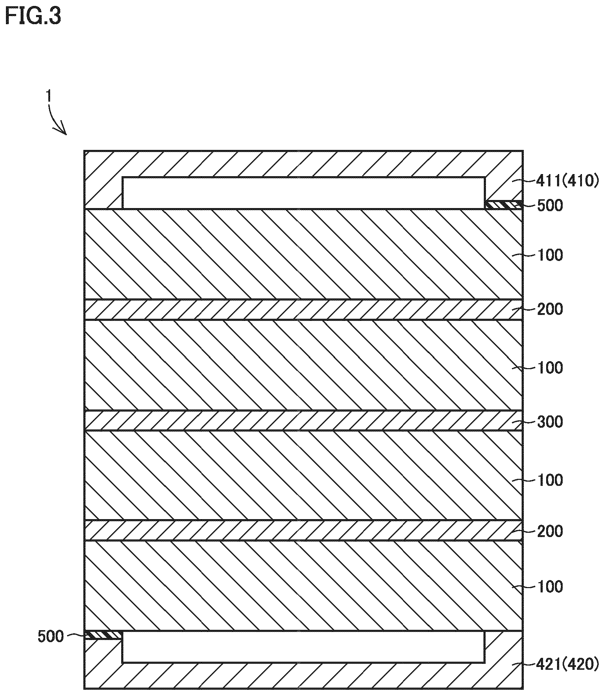

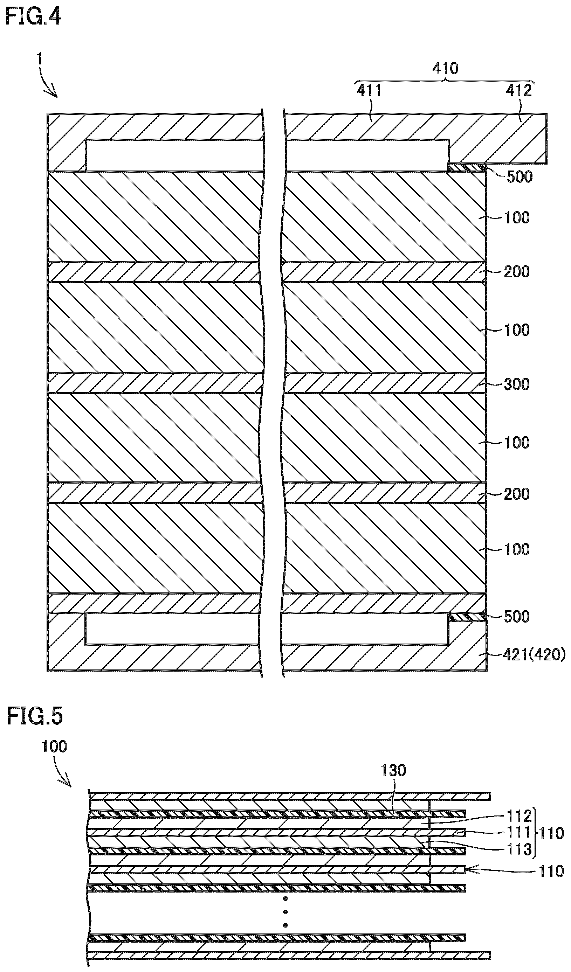

Fig. 1 is a perspective view schematically showing a power storage device according to an embodiment of the present disclosure. Fig. 2 is a plan view of the power storage device. Fig. 3 is a cross-sectional view taken along line III-III in Fig. 2. Fig. 4 is a cross-sectional view taken along line IV-IV in Fig. 2. As shown in Figs. 1 to 4, a power storage device 1 includes a plurality of electrode assemblies 100, a cooler 200, a current-carrying plate 300, a pair of conductive members 400, and an insulating member 500.

The plurality of electrode assemblies 100 are stacked on top of each other. In the present embodiment, the plurality of electrode assemblies 100 include four electrode assemblies 100. However, the number of electrode assemblies 100 is not limited to four. Each electrode assembly 100 is formed to have a rectangular outer shape in a plan view. Each electrode assembly 100 is formed by stacking a plurality of electrodes.

Each electrode may be implemented by a bipolar electrode 110 shown in Fig. 5. Bipolar electrode 110 includes a current-collecting foil 111, a positive electrode active material layer 112 provided on one surface of current-collecting foil 111, and a negative electrode active material layer 113 provided on the other surface of current-collecting foil 111. In this case, electrode assembly 100 is formed by alternately stacking bipolar electrode 110 and a separator 130.

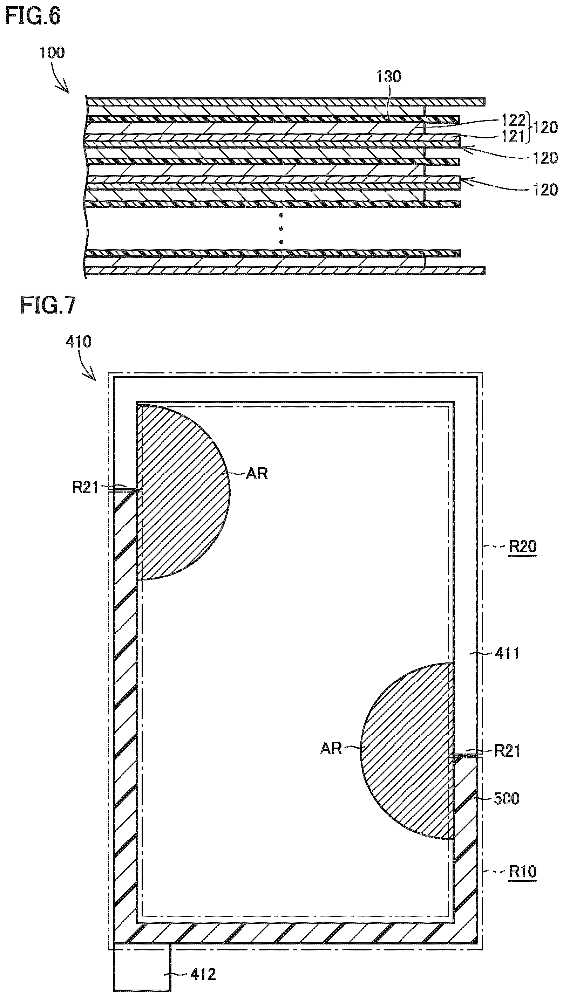

Alternatively, each electrode may be implemented by a monopolar electrode 120 shown in Fig. 6. Positive electrode monopolar electrode 120 or negative electrode monopolar electrode 120 includes a current-collecting foil 121, and an active material layer 122 provided on current-collecting foil 121. In this case, electrode assembly 100 is formed by stacking positive electrode monopolar electrode 120 and negative electrode monopolar electrode 120 with separator 130 interposed therebetween.

As shown in Figs. 3 to 6, an outermost surface of each electrode assembly 100 in a stacking direction of the plurality of electrodes is formed by the electrode.

Cooler 200 is provided between a pair of electrode assemblies 100 that are adjacent to each other. Cooler 200 brings the pair of electrode assemblies 100 into conduction. In the present embodiment, cooler 200 is arranged between electrode assembly 100 arranged on the outermost side of the plurality of electrode assemblies 100 in a stacking direction (vertical direction in Figs. 3 and 4) of the plurality of electrode assemblies 100 and electrode assembly 100 adjacent to that electrode assembly 100. A flow path through which a coolant (such as water) can flow is provided in cooler 200.

Current-carrying plate 300 is arranged between second electrode assembly 100 from the bottom and third electrode assembly 100 from the bottom. Current-carrying plate 300 may be formed to have a flat plate shape.

Each conductive member 400 is in contact with electrode assembly 100. As shown in Figs. 2 to 4, the pair of conductive members 400 include an upper conductive member 410 arranged on uppermost electrode assembly 100, and a lower conductive member 420 arranged under lowermost electrode assembly 100. Each of conductive members 410 and 420 forms a current collector member.

Upper conductive member 410 includes a conductive member body 411 and a current collector terminal 412.

Conductive member body 411 overlaps with electrode assembly 100 in the stacking direction. As shown in Figs. 3 and 4, a recess that is recessed outwardly in the stacking direction is formed in a central portion of conductive member body 411. The central portion of conductive member body 411 may be formed by a through hole. Conductive member body 411 is formed to have a rectangular outer shape in a plan view.

Current collector terminal 412 is continuous to conductive member body 411. Current collector terminal 412 protrudes outwardly in a direction orthogonal to the stacking direction.

Lower conductive member 420 includes a conductive member body 421 having the same configuration as that of conductive member body 411 of upper conductive member 410, and a current collector terminal 422 that is continuous to conductive member body 421. As shown in Fig. 2, current collector terminal 422 is provided at such a position that current collector terminal 422 does not overlap with current collector terminal 412 in a plan view. However, current collector terminal 422 may be provided at such a position that at least a part of current collector terminal 422 overlaps with current collector terminal 412 in a plan view.

Since conductive member body 411 of upper conductive member 410 and conductive member body 421 of lower conductive member 420 have the same configuration, conductive member body 411 will be described below. As shown in Fig. 7, conductive member body 411 includes an insulated region R10 and an electrically conducting region R20.

Insulated region R10 is a region insulated from electrode assembly 100. In the present embodiment, as shown in Figs. 3 and 4, insulating member 500 is arranged between insulated region R10 and electrode assembly 100. Insulated region R10 is adjacent to current collector terminal 412.

Electrically conducting region R20 is a region where at least a part of electrically conducting region R20 is electrically connected to electrode assembly 100. At least a part of electrically conducting region R20 is in contact with electrode assembly 100 directly or with a not-shown conductive material (such as a conductive adhesive) interposed therebetween. A distance between current collector terminal 412 and electrically conducting region R20 is greater than a distance between current collector terminal 412 and insulated region R10. Electrically conducting region R20 is adjacent to insulated region R10.

Electrically conducting region R20 includes a plurality of electrically conducting portions R21 (see Fig. 7). It is preferable that electrical resistances between electrically conducting portions R21 and current collector terminal 412 should be set to be equal to each other. However, the electrical resistances between electrically conducting portions R21 and current collector terminal 412 may be different from each other. As shown by a diagonally shaded region AR in Fig. 7, a current flowing through each conductive member 410, 420 flows from electrically conducting portion R21 toward electrode assembly 100. Insulated region R10 is a region that insulates a portion of conductive member body 411 between current collector terminal 412 and each electrically conducting portion R21.

As described above, in power storage device 1 according to the present embodiment, the distance between current collector terminal 412, 422 and electrically conducting region R20 is greater than the distance between current collector terminal 412, 422 and insulated region R10. Therefore, the current flows toward electrode assembly 100 from a portion of conductive member body 411, 421 that is relatively far from current collector terminal 412, 422. Thus, concentration of the current on a portion of conductive member 400 in the vicinity of current collector terminal 412, 422 is suppressed.

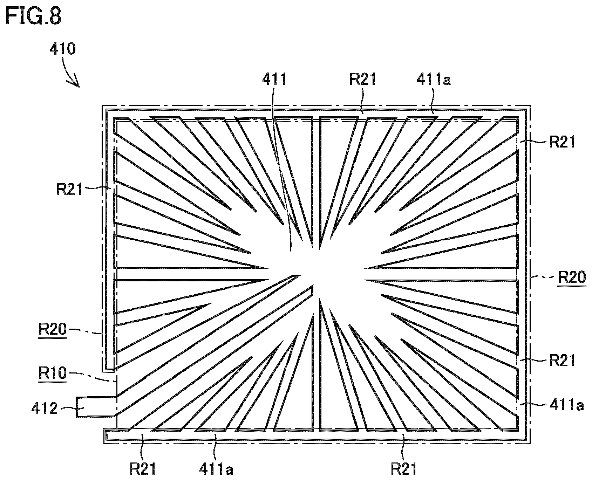

In the above-described embodiment, as shown in Fig. 8, the plurality of electrically conducting portions R21 may be arranged to align at substantially regular intervals along an outer edge portion 411a of conductive member body 411. In this case, insulating member 500 may be formed to have such a shape (a rectangular shape or the like) that insulating member 500 insulates a portion inside outer edge portion 411a of conductive member body 411. Insulating member 500 is not shown in Fig. 8. An outer shape of insulating member 500 substantially corresponds to an outer shape of insulated region R10.

It is understood by those skilled in the art that the illustrative embodiment and example described above are specific examples of the following aspects.

In the power storage device, the distance between the current collector terminal and the electrically conducting region is greater than the distance between the current collector terminal and the insulated region. Therefore, the current flows toward the electrode assembly from a portion of the conductive member body that is relatively far from the current collector terminal. Thus, concentration of the current on a portion of the conductive member in the vicinity of the current collector terminal is suppressed.

According to the invention, concentration of the current on a portion of the conductive member in the vicinity of the current collector terminal is suppressed more reliably.

Although the embodiment of the present disclosure has been described, it should be understood that the embodiment disclosed herein is illustrative and nonrestrictive in every respect. The scope of the present disclosure is defined by the terms of the claims.

## Claims

1. A power storage device (1) comprising:
an electrode assembly (100) formed by stacking a plurality of electrodes (110, 120); and
a conductive member (400) that is in contact with the electrode assembly, wherein
the conductive member includes:
a conductive member body (411) that overlaps with the electrode assembly in a stacking direction of the plurality of electrodes; and
a current collector terminal (412) that is continuous to the conductive member body and that protrudes outwardly in a direction orthogonal to the stacking direction,
the conductive member body includes:
an insulated region (R10) insulated from the electrode assembly, the insulated region (R10) being adjacent to the current collector terminal (412); and
an electrically conducting region (R20), at least a part of the electrically conducting region being electrically connected to the electrode assembly, the electrically conducting region (R20) being adjacent to the insulated region (R10), wherein
the electrically conducting region (R20) includes a plurality of electrically conducting portions (R21), each of the plurality of electrically conducting portions being electrically connected to the electrode assembly, and
electrical resistances between the plurality of electrically conducting portions (R21) and the current collector terminal (412) are equal to each other, and
a distance between the current collector terminal and the electrically conducting region is greater than a distance between the current collector terminal and the insulated region.

2. The power storage device according to claim 1, further comprising
an insulating member (500) provided between the insulated region and the electrode assembly.

## Patentansprüche

1. Energiespeichervorrichtung (1), die Folgendes umfasst:
eine Elektrodenanordnung (100), die durch Stapeln mehrerer Elektroden (110, 120) gebildet ist; und
ein leitfähiges Element (400), das mit der Elektrodenanordnung in Kontakt ist, wobei das leitfähige Element Folgendes enthält:
einen Körper (411) des leitfähigen Elements, der mit der Elektrodenanordnung in einer Stapelrichtung der mehreren Elektroden überlappt; und
einen Stromabnehmeranschluss (412), der mit dem Körper des leitfähigen Elements zusammenhängend ist und der in einer Richtung senkrecht zu der Stapelrichtung nach außen vorsteht,
wobei der Körper des leitfähigen Elements Folgendes enthält:
ein isoliertes Gebiet (R10), das von der Elektrodenanordnung isoliert ist, wobei das isolierte Gebiet (R10) zu dem Stromabnehmeranschluss (412) benachbart ist; und
ein elektrisch leitendes Gebiet (R20), wobei wenigstens ein Teil des elektrisch leitenden Gebiets mit der Elektrodenanordnung elektrisch verbunden ist, wobei das elektrisch leitende Gebiet (R20) zu dem isolierten Gebiet (R10) benachbart ist, wobei
das elektrisch leitende Gebiet (R20) mehrere elektrisch leitende Abschnitte (R21) enthält, wobei jeder der mehreren elektrisch leitenden Abschnitte mit der Elektrodenanordnung elektrisch verbunden ist, und
die elektrischen Widerstände zwischen den mehreren elektrisch leitenden Abschnitten (R21) und dem Stromabnehmeranschluss (412) zueinander gleich sind, und ein Abstand zwischen dem Stromabnehmeranschluss und dem elektrisch leitenden Gebiet größer als ein Abstand zwischen dem Stromabnehmeranschluss und dem isolierten Gebiet ist.

2. Energiespeichervorrichtung nach Anspruch 1, die ferner Folgendes umfasst:
ein isolierendes Element (500), das zwischen dem isolierten Gebiet und der Elektrodenanordnung vorgesehen ist.

## Revendications

1. Dispositif de stockage d'énergie (1), comprenant :
un ensemble électrode (100) formé par empilement d'une pluralité d'électrodes (110, 120) ; et
un élément conducteur (400) qui est en contact avec l'ensemble électrode,
l'élément conducteur comprenant :
un corps (411) d'élément conducteur qui chevauche l'ensemble électrode dans une direction d'empilement de la pluralité d'électrodes ; et
une borne collectrice de courant (412) qui est continue au corps d'élément conducteur et qui fait saillie vers l'extérieur dans une direction orthogonale à la direction d'empilement,
le corps d'élément conducteur comprenant :
une région isolée (R10) isolée de l'ensemble électrode, la région isolée (R10) étant adjacente à la borne collectrice de courant (412) ; et
une région électriquement conductrice (R20), au moins une partie de la région électriquement conductrice étant connectée électriquement à l'ensemble électrode, la région électriquement conductrice (R20) étant adjacente à la région isolée (R10),
la région électriquement conductrice (R20) comportant une pluralité de parties électriquement conductrices (R21), chacune de la pluralité de parties électriquement conductrices étant connectée électriquement à l'ensemble électrode, et
des résistances électriques entre la pluralité de parties électriquement conductrices (R21) et la borne collectrice de courant (412) étant égales les unes aux autres, et
une distance entre la borne collectrice de courant et la région électriquement conductrice étant supérieure à une distance entre la borne collectrice de courant et la région isolée.

2. Dispositif de stockage d'énergie selon la revendication 1, comprenant en outre
un élément isolant (500) prévu entre la région isolée et l'ensemble électrode.
